# EUROPÄISCHE PATENTSCHRIFT

(11) **EP 1 492 685 B1**
(45) Veröffentlichungstag und Bekanntmachung des Hinweises auf die Patenterteilung: **29.11.2006**
(21) Anmeldenummer: 03708190.8
(22) Anmeldetag: 07.03.2003
(51) Int. Cl.: B60N 2/02, B60N 2/427, B60N 2/48

(54) **KOPFST TZE F R EINEN FAHRZEUGSITZ**
HEADREST FOR A VEHICLE SEAT
REPOSE-TETE POUR SIEGE DE VEHICULE

(30) Priorität: 05.04.2002 DE 10215054
(43) Veröffentlichungstag der Anmeldung: 05.01.2005
(73) Patentinhaber: KEIPER GmbH & Co. KG, 67657 Kaiserslautern (DE)
(72) Erfinder: SCHÄFER, Volker, 67731 Otterbach (DE); JUNG, Thomas, 67753 Aschbach (DE); BERBERICH, Andreas, 66849 Landstuhl (DE); KREUELS, Olaf, 66482 Zweibrücken (DE)
(74) Vertreter: Patentanwälte Hosenthien-Held und Dr. Held
(86) Internationale Anmeldenummer: PCT/EP2003/002333
(87) Internationale Veröffentlichungsnummer: WO 2003/084777

(56) Entgegenhaltungen:
- EP-A- 1 193 114
- WO-A-01/12465
- DE-A- 10 001 329
- DE-C- 10 026 978
- US-B1- 6 203 105

## Beschreibung

Die Erfindung betrifft eine Kopfstütze für einen Fahrzeugsitz mit den Merkmalen des Oberbegriffs des Anspruches 1.

Es sind verschiedene Möglichkeiten bekannt, eine crashaktive Kopfstütze auszulösen. In der DE 39 00 495 A1 ist eine Kopfstütze offenbart, bei welcher eine verlagerbare Masse als Sensor vorgesehen ist, die im Crashfall eine Verriegelungseinheit löst, so dass ein Polsterelement durch einen Kolben beaufschlagenden Druckspeicher und durch Federn rasch nach vorne geschoben wird. Aus der EP 1 193 114 A1 ist eine Kopfstütze der eingangs genannten Art mit einem magnetischen Auslösegerät bekannt.

Der Erfindung liegt die Aufgabe zu Grunde, eine Kopfstütze der eingangs genannten Art zu verbessern. Diese Aufgabe wird erfindungsgemäß durch eine Kopfstütze mit den Merkmalen des Anspruches 1 gelöst. Vorteilhafte Ausgestaltungen sind Gegenstand der Unteransprüche.

Dadurch, dass die Verriegelungseinheit einen Haftmagneten aufweist, also als Verriegelungseinheit mit magnetischer Haltekraft ausgebildet ist, ist ein sicherer und schneller Übergang der Verriegelungseinheit vom verriegelten Zustand in den entriegelten Zustand bei kompakter Bauweise gewährleistet. Im Vergleich zu formschlüssigen Lösungen, bei denen anfangs eine Reibung zu überwinden ist, kann die erfindungsgemäße Lösung, welche in der obersten Ebene der Verriegelungseinheit quasi kraftschlüssig ist, schneller auslösen. Die magnetische Haltekraft, welche durch einen Permanentmagnet aufgebracht wird, ist zudem störunanfällig. Durch die Spule kann die magnetische Haltekraft schnell und in großem Ausmaß geändert werden, beispielsweise indem im Crashfall die Spule des Haftmagneten bestromt und ein dem Permanentmagneten entgegengesetztes Magnetfeld aufgebaut wird, also die Kraft des Haftmagneten geschwächt wird. Es ist aber auch möglich, das Magnetfeld zu verstärken, um eine anziehende Haltekraft zu verstärken.

Vorzugsweise wird die magnetische Haltekraft so eingesetzt, daß in einem verriegelten Zustand der Verriegelungseinheit der Haftmagnet über Haltemittel den gespannten Antrieb, beispielsweise eine Feder, festhält bzw. zurückhält, was in der Regel nicht direkt und unmittelbar, sondern mittelbar und durch geeignete Übersetzungen mehrstufig erfolgt. Im Crashfall geben dann bei vorzugsweise geschwächtem Haftmagneten die vorgespannten Haltemittel den gespannten Antrieb frei, lösen also vorspannungsunterstützt aus, insbesondere federunterstützt. Dies ist gegenüber Lösungen, bei denen entgegen einer Vorspannung ausgelöst wird, zeitgünstiger, d.h. mit der erfindungsgemäßen Lösung wird schneller ausgelöst. Der Haftmagnet kann auch auf andere Weise den Antrieb indirekt festhalten, d.h. den verriegelten Zustand aufrecht erhalten, indem er vorgespannte Auslösemittel festhält bzw. zurückhält, welche bei Freigabe im Crashfall die Haltemittel beaufschlagen und damit den verriegelten Zustand, in welchem die Haltemittel den gespannten Antrieb halten, aufheben.

Als bevorzugte Haltemittel sind schwenkbare Bauelemente, wie Klinken, Fangstücke, Spannstücke und dergleichen, vorgesehen, welche durch eigene Federbelastungen bestimmte Relativstellungen zueinander einnehmen. Vorzugsweise sperren sich zwei Haltemittel - beispielsweise eine Klinke und ein Fangstück oder eine Klinke und eine mit einem Auslösehebel kombinierte Haltefeder - sowohl im verriegelten Zustand als auch im entriegelten Zustand, und zwar in verschiedenen, definierten Relativstellungen, die beispielsweise gekippt zueinander sind. Damit kann der entriegelte Zustand so ausgelegt werden, daß die Verriegelungseinheit für einen Reset bereit ist, also den Antrieb wieder aufnehmen kann. Eine Haftplatte kann gelenkig mit dem Fangstück verbunden sein oder mit dem als Auslösemittel dienenden Auslösehebel verbunden sein, und so durch eine Bewegung entweder das Fangstück zwingen, die Klinke freizugeben, oder durch Beaufschlagung der Haltemittel den verriegelten Zustand beenden.

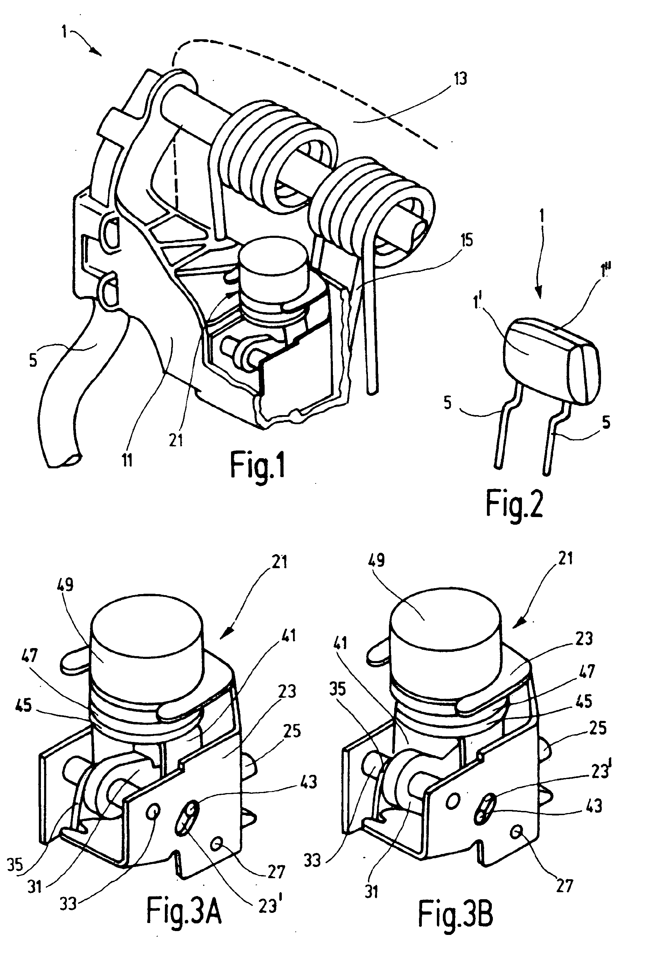

Im folgenden ist die Erfindung anhand zweier in der Zeichnung dargestellten Ausführungsbeispiele näher erläutert. Es zeigen
- Fig. 1: eine perspektivische, teilweise geschnitten dargestellte Teilansicht der Struktur der Kopfstütze gemäß dem ersten Ausführungsbeispiel mit Blickrichtung von schräg hinten,
- Fig. 2: eine schematische, perspektivische Ansicht der Kopfstütze mit Blickrichtung entsprechend Fig. 1,
- Fig. 3A: eine Teilansicht von Fig. 1, welche die Verriegelungseinheit im verriegelten Zustand zeigt,
- Fig. 3B: eine Darstellung entsprechend Fig. 3A, welche die Verriegelungseinheit im entriegelten Zustand zeigt,

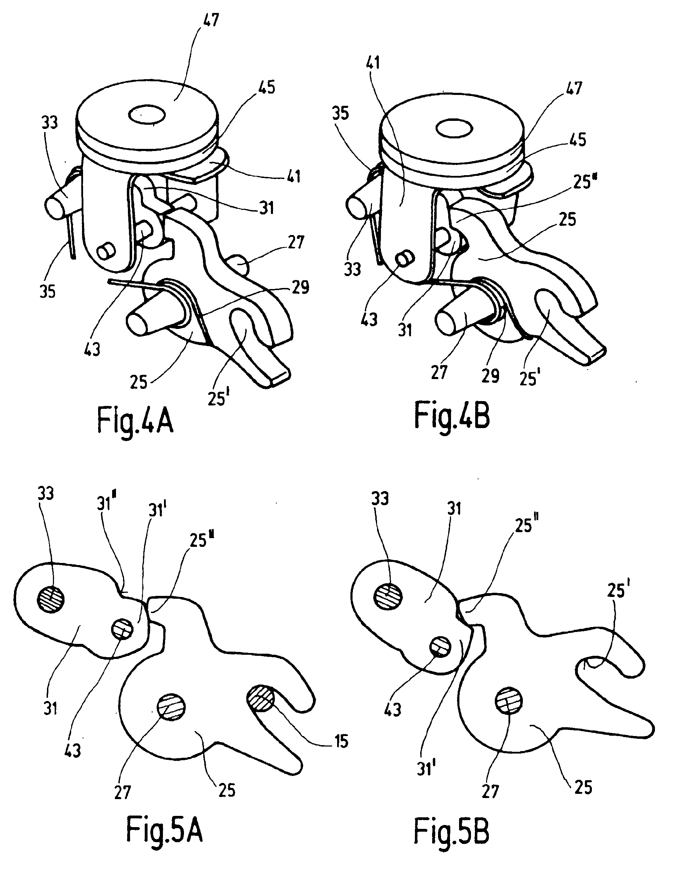

- Fig. 4A: eine perspektivische Teilansicht der Verriegelungseinheit im verriegelten Zustand mit Blickrichtung von schräg vorne,
- Fig. 4B: eine Darstellung entsprechend Fig. 4A im entriegelten Zustand,
- Fig. 5A: Klinke und Fangstück im verriegelten Zustand der Verriegelungseinheit,
- Fig. 5B: eine Darstellung entsprechend Fig. 5A im entriegelten Zustand,

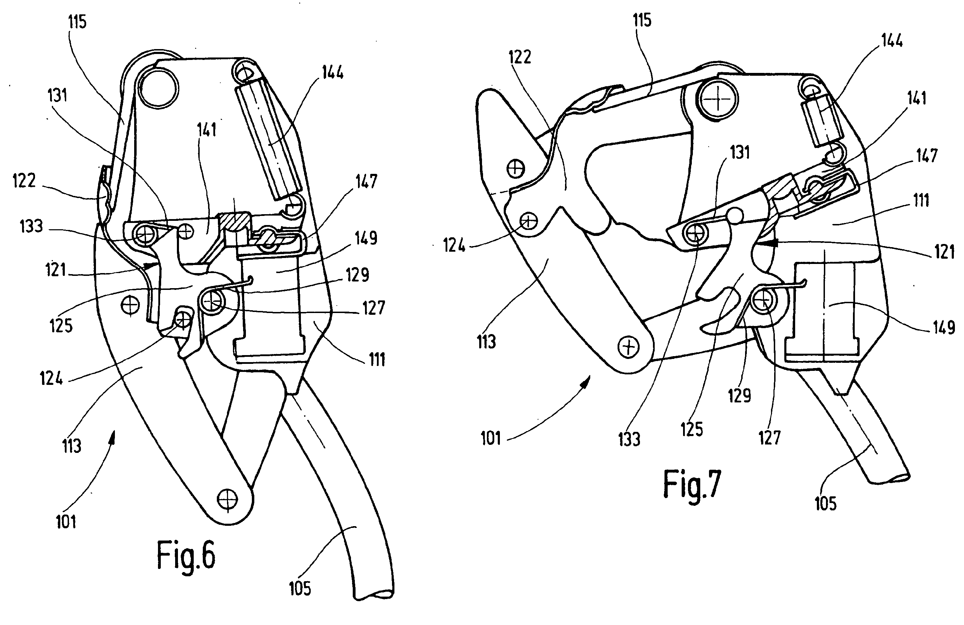

- Fig. 6: einen Schnitt durch die Kopfstütze gemäß dem zweiten Ausführungsbeispiel im verriegelten Zustand, und
- Fig. 7: einen Schnitt entsprechend Fig. 6 im entriegelten Zustand.

Im ersten Ausführungsbeispiel weist eine Kopfstütze 1 für einen Fahrzeugsitz zwei Kopfstützenstangen 5 auf, mittels derer sie an der Lehne des Fahrzeugsitzes befestigt ist. Die Kopfstütze 1 umfaßt eine feststehende erste Baugruppe 1' und eine bewegliche zweite Baugruppe 1", welche im Crashfall, insbesondere bei einem Heckcrash, relativ zur feststehenden ersten Baugruppe 1' nach vorne bewegt wird. Hierfür weist die Kopfstütze 1 einen zwischen den beiden Kopfstützenstangen 5 angeordneten Träger 11 als Struktur der feststehenden ersten Baugruppe 1' und einen in der Zeichnung nur angedeuteten Prallkörper 13 als Struktur der beweglichen zweiten Baugruppe 1" auf, welcher mittels eines nicht näher dargestellten Viergelenks am Träger 11 angelenkt ist. Eine vorgespannte Doppelschenkelfeder 15 dient als Antrieb des Prallkörpers 13 im Crashfall.

Die Doppelschenkelfeder 15 wird im Normalfall durch eine Verriegelungseinheit 21 gehalten, deren verriegelter Zustand im folgenden beschrieben ist. Die Verriegelungseinheit 21 weist ein am Träger 11 montiertes Gehäuse 23 auf, in welchem eine Klinke 25 um einen Klinken-Bolzen 27 schwenkbar gelagert ist, die mit ihrem Klinkenmaul 25' einen horizontal verlaufenden Mittelabschnitt der vorgespannten Doppelschenkelfeder 15 festhält. Die in Öffnungsrichtung durch eine Klinken-Feder 29 vorgespannte Klinke 25 wird durch ein in Öffnungsrichtung angeordnetes Fangstück 31 gehalten, welches über einen Haltenocken 31' an einer Haltenase 25" der Klinke 25 anliegt. Das Fangstück 31 ist auf einem Fangstück-Bolzen 33 schwenkbar im Gehäuse 23 gelagert und durch eine schwache Fangstück-Feder 35 nach oben vorgespannt, wirkt also der Klinken-Feder 29 entgegen.

Am Fangstück 31 ist ein U-förmiger, nach unten offener Blechbügel 41 mittels eines Blechbügel-Bolzens 43 an seinen freien Enden angebracht. Der Blechbügel-Bolzen 43 greift in Kulissen 23' des Gehäuses 23. Der Blechbügel 41 trägt auf seiner Oberseite eine kreisscheibenförmige Isolierplatte 45 aus Kunststoff, auf welcher eine ringförmige Haftplatte 47 von gleichem Durchmesser durch die Isolierplatte 45 hindurch am Blechbügel 41 festgenietet oder in abgewandelter Form festgeklebt ist. Die aus Weicheisen bestehende Haftplatte 47 liegt an der Unterseite eines zylindrisch geformten Haftmagneten 49 an, welcher mit einem Permanentmagneten und einer darum gewickelten Spule versehen ist, die zunächst unbestromt ist. Der Haftmagnet 49 weist eine Ringnut auf, mit welcher er in einen gabelförmigen Laschenbereich des Gehäuses 23 geschoben und dadurch fixiert ist. Die magnetische Haltekraft des Haftmagneten 49 hält so über die zuvor beschriebenen Haltemittel die Verriegelungseinheit 21 im verriegelten Zustand.

Im Crashfall geht die Verriegelungseinheit 21 vom verriegelten in den entriegelten Zustand über. Hierzu wird durch ein nicht näher dargestelltes, mit einem Beschleunigungssensor verbundenes Steuergerät die Spule des Haftmagnet 49 bestromt, wobei deren Magnetfeld demjenigen des Permanentmagneten entgegengesetzt ist. Die Haltekraft des Haftmagneten 49 wird dadurch reduziert, d.h. die Haftplatte 47 kann mit samt dem Blechbügel 41 und dem Fangstück 31 ausweichen. Die federbelastete Klinke 25 kann daher das Fangstück 31 nach unten drücken, d.h. der Haltenocken 31' löst sich von der Haltenase 25". Mit der Schwenkbewegung des Fangstücks 31 vollführt die Haftplatte 47 eine Kippbewegung, welche durch die Führung des Blechbügel-Bolzens 43 in den Kulissen 23' definiert ist. Die Klinken-Feder 29 schwenkt die Klinke 25 in Öffnungsrichtung, bis die Haltenase 25" in eine oberhalb des Haltenockens 31' angeordnete Aufnahme 31" des Fangstücks 31 gelangt, und die Klinke 25 dadurch gesperrt wird. Die sich öffnende Klinke 25 gibt die Doppelschenkelfeder 15 frei, welche den Prallkörper 13 nach vorne schnellt, so daß er sich dem Kopf des Insassens nähert.

Zum Zurückstellen des Systems, d.h. für einen Reset, kann der Prallkörper 13 zurück in seine Ausgangsposition gedrückt werden, wodurch er die Doppelschenkelfeder 15 spannt. Sobald die Doppelschenkelfeder 15 in Anlage an eine Lippe des Hakenmauls 25' gelangt, schwenkt sie die Klinke 25 entgegen der Kraft der Klinken-Feder 29 in Schließrichtung. Die Haltenase 25" entfernt sich aus der Aufnahme 31", so daß die Fangstück-Feder 35 das Fangstück 31 zurückschwenkt, d.h. nach oben, wo dieses wieder die Klinke 25 hält. Die über den Blechbügel 41 angehobene Haftplatte 47 gelangt wieder in Anlage an den Haftmagneten 49 und hält aufgrund von dessen Anziehungskraft das Fangstück 31 oben, also die Verriegelungseinheit 21 im verriegelten Zustand.

Das zweite Ausführungsbeispiel stimmt mit dem ersten Ausführungsbeispiel weitgehend überein, weshalb gleiche und gleichwirkende Bauteile um 100 höhere Bezugszeichen tragen. Die Kopfstütze 101 weist ebenfalls auf zwei Kopfstützenstangen 105 einen Träger 111 als Struktur einer feststehenden, ersten Baugruppe und einen mittels zweier Viergelenke relativ zum Träger 111 beweglichen Prallkörper 113 als Struktur einer beweglichen zweiten Baugruppe auf. Als Antrieb für den Prallkörper 113 ist eine Doppelschenkelfeder 115 vorgesehen, die durch eine Verriegelungseinheit 121 gehalten wird. Die Verriegelungseinheit 121 weist zunächst ein gleichachsig mit der Doppelschenkelfeder 115 schwenkbares und diese zurückhaltendes Fangblech 122 auf, an dessen freiem Ende ein horizontal angeordneter Haltebolzen 124 vorgesehen ist. Eine Klinke 125, welche um einen Klinken-Bolzen 127 schwenkbar und durch eine Klinken-Feder 129 in Öffnungsrichtung vorgespannt ist, hält den Haltebolzen 124 formschlüssig fest.

Eine Haltefeder 131 ist mit einem Teil um einen Haltefeder-Bolzen 133 gewickelt. Mit dem anderen Teil, welches einen beweglichen Lagerarm definiert und am Ende abgewinkelt und mit einem Rundelement versehen ist, hintergreift die Haltefeder 131 die Klinke 125 auf der in Öffnungsrichtung voreilenden Seite. Dabei zeigt der Lagerarm ungefähr in Öffnungsrichtung, so daß die Klinke 125 nur ein geringes öffnendes Moment auf die Haltefeder 131 ausüben kann. Ein ebenfalls auf dem Haltefeder-Bolzen 133 schwenkbar gelagerter Auslösehebel 141 wird durch eine Auslösefeder 144 vorgespannt, wobei er auf der von der Auslösefeder 144 abgewandten Seite eine Haftplatte 147 aus Weicheisen trägt, die von einem Haftmagneten 149 entgegen der Kraft der Auslösefeder 144 angezogen wird.

Der Haftmagnet 149 weist wiederum eine zunächst unbestromte Spule und einen Permanentmagneten auf, welcher im verriegelten Zustand der Verriegelungsvorrichtung 121 die notwendige magnetische Haltekraft aufbringt, um den Auslösehebel 141 und damit die gesamte Verriegelungsvorrichtung 121 zu halten. Im Crashfall wird die Spule kurzzeitig bestromt, d.h. mit einem Impuls, wobei sie aufgrund ihrer Ausrichtung das Magnetfeld des Permanentmagneten schwächt und damit die magnetische Haltekraft des Haftmagneten 149 deutlich verringert. Der Haftmagneten 149 gibt daher die Haftplatte 147 frei, so daß die Auslösefeder 144 den Auslösehebel 141 vom Haftmagneten 149 weg, in der Zeichnung nach oben, ziehen kann. Die Haltefeder 131 ist mit dem Auslösehebel 141 auf Mitnahme gekoppelt, so daß sie ebenfalls nach oben gezogen wird. Die Klinke 125 kommt dadurch frei, so daß die Klinken-Feder 129 die Klinke 125 öffnen kann, d.h. das Fangblech 122 und damit die Doppelschenkelfeder 115 werden durch die so entriegelte Verriegelungsvorrichtung 121 freigegeben, worauf der Prallkörper 113 ausfährt.

Zum Zurückstellen der Kopfstütze 101 wird der Auslösehebel 141 zurück zum Haftmagneten 149 gebracht, von welchem er wieder über die Haftplatte 147 angezogen wird. Beim Zurückdrücken des Prallkörpers 113 gelangt der Haltebolzen 124 in die geöffnete Klinke 125 und dreht diese zurück. Sobald die Haltefeder 131 wieder die Klinke 125 hintergreifen kann, ist die Verriegelungsvorrichtung 121 wieder in einem verriegelten Zustand.

### Bezugszeichenliste

- 1, 101: Kopfstütze
- 1': feststehende erste Baugruppe
- 1": bewegliche zweite Baugruppe
- 5, 105: Kopfstützenstange
- 11, 111: Träger
- 13, 113: Prallkörper
- 15, 115: Doppelschenkelfeder, Antrieb
- 21, 121: Verriegelungseinheit
- 23: Gehäuse
- 23': Kulisse
- 25, 125: Klinke
- 25': Klinkenmaul
- 25'': Haltenase
- 27, 127: Klinken-Bolzen
- 29, 129: Klinken-Feder
- 31: Fangstück
- 31': Haltenocken
- 31": Aufnahme
- 33: Fangstück-Bolzen
- 35: Fangstück-Feder
- 41: Blechbügel
- 43: Blechbügel-Bolzen
- 45: Isolierplatte
- 47, 147: Haftplatte
- 49, 149: Haftmagnet
- 122: Fangblech
- 124: Haltebolzen
- 131: Haltefeder
- 133: Haltefeder-Bolzen
- 141: Auslösehebel, Auslösemittel
- 144: Auslösefeder

## Patentansprüche

1. Kopfstütze (1, 101) für einen Fahrzeugsitz, insbesondere für einen Kraftfahrzeugsitz, mit einer feststehenden, ersten Baugruppe (1', 11; 111) und einer beweglichen, zweiten Baugruppe (1'', 13; 113), wobei ein im Normalfall durch eine Verriegelungseinheit (21; 121) gehaltener Antrieb (15; 115) die zweite Baugruppe (1", 11; 111) relativ zur ersten Baugruppe (1', 13; 113) nach vorne bewegt, **dadurch gekennzeichnet, dass** die Verriegelungseinheit (21; 121) einen Haftmagneten (49; 149) mit einem Permanentmagneten zur Aufbringung einer magnetischen Haltekraft und einer im Crashfall bestromten Spule zur Änderung der magnetischen Haltekraft im Crashfall aufweist.

2. Kopfstütze (1, 101) Anspruch 1, **dadurch gekennzeichnet, dass** die im Crashfall bestromte Spule des Haftmagneten (49; 149) ein dem Permanentmagneten entgegenwirkendes Magnetfeld aufbaut.

3. Kopfstütze (1, 101) nach Anspruch 1 oder 2, **dadurch gekennzeichnet, dass** in einem verriegelten Zustand der Verriegelungseinheit (21; 121) der Haftmagnet (49; 149) über Haltemittel (25, 31, 41, 47; 122, 125, 131, 141) den gespannten Antrieb (15; 115) festhält.

4. Kopfstütze (1, 101) nach Anspruch 3, **dadurch gekennzeichnet, dass** im Crashfall die Haltemittel (25, 31, 41, 47; 122, 125, 131, 141) den gespannten Antrieb (15; 115) freigeben.

5. Kopfstütze (1, 101) nach Anspruch 3 oder 4, **dadurch gekennzeichnet, dass** die Haltemittel (25, 31, 41, 47; 122, 125, 131, 141) schwenkbare, federbelastete Bauteile (25, 31; 125, 131, 141) umfassen.

6. Kopfstütze (1, 101) nach einem der Ansprüche 3 bis 5, **dadurch gekennzeichnet, dass** die Haltemittel (25, 31, 41, 47; 122, 125, 131, 141) eine Klinke (25; 125), welche im verriegelten Zustand den als Feder ausgebildeten, gespannten Antrieb (15; 115) wenigstens mittelbar festhält, und ein Fangstück (31) oder eine Haltefeder (131) umfassen, welches bzw. welche im verriegelten Zustand die in Öffnungsrichtung vorgespannte Klinke (25; 125) sperrt.

7. Kopfstütze (1, 101) nach Anspruch 6, **dadurch gekennzeichnet, dass** im entriegelten Zustand das Fangstück (31) die in Öffnungsrichtung bewegte Klinke (25) wiederum sperrt.

8. Kopfstütze (1, 101) nach einem der Ansprüche 3 bis 7, **dadurch gekennzeichnet, dass** die Haltemittel (25, 31, 41, 47; 122, 125, 131, 141) eine Haftplatte (47; 147) umfassen, welche im verriegelten Zustand der Verriegelungseinheit (21; 121) am Haftmagneten (49; 149) anliegt und zum Übergang in den entriegelten Zustand eine Kipp- oder Schwenkbewegung durchführt.

9. Kopfstütze (1, 101) nach Anspruch 8, **dadurch gekennzeichnet, dass** die Haftplatte (47; 147) gelenkig mit dem Fangstück (31) verbunden ist und/oder mit einem die Haltemittel (25, 31, 41, 47; 122, 125, 131, 141) wenigstens im Crashfall beaufschlagenden Auslösemittel (141) verbunden ist.

## Claims

1. Head restraint (1, 101) for a vehicle seat, in particular for a motor vehicle seat, having a fixed, first subassembly (1', 11; 111) and a movable, second subassembly (1'', 13; 113), wherein a drive (15; 115), which is normally retained by a locking unit (21; 121), moves the second subassembly (1'', 11; 111) forwards relative to the first subassembly (1', 13; 113), **characterised in that** the locking unit (21; 121) has a clamping magnet (49; 149) having a permanent magnet for applying a magnetic retaining force and having a coil, which is energised in the event of a crash, for changing the magnetic retaining force in the event of a crash.

2. Head restraint (1, 101) according to claim 1, **characterised in that** the coil of the clamping magnet (49; 149), which coil is energised in the event of a crash, builds up a magnetic field counteracting the permanent magnet.

3. Head restraint (1, 101) according to claim 1 or 2, **characterised in that**, in a locked state of the locking unit (21; 121), the clamping magnet (49; 149) secures the tensioned drive (15; 115) via retaining means (25, 31, 41, 47; 122, 125, 131, 141).

4. Head restraint (1, 101) according to claim 3, **characterised in that**, in the event of a crash, the retaining means (25, 31, 41, 47; 122, 125, 131, 141) release the tensioned drive (15; 115).

5. Head restraint (1, 101) according to claim 3 or 4, **characterised in that** the retaining means (25, 31, 41, 47; 122, 125, 131, 141) comprise pivotable, spring-loaded components (25, 31; 125, 131, 141).

6. Head restraint (1, 101) according to any one of claims 3 to 5, **characterised in that** the retaining means (25, 31, 41, 47; 122, 125, 131, 141) comprise a catch (25; 125), which, in the locked state, at least indirectly secures the tensioned drive (15; 115), which is in the form of a spring, and an intercepting element (31) or a retaining spring (131) which, in the locked state, blocks the catch (25; 125), which is pretensioned in the opening direction.

7. Head restraint (1,101) according to claim 6, **characterised in that**, in the unlocked state, the intercepting element (31) again blocks the catch (25), which is moved in the opening direction.

8. Head restraint (1, 101) according to any one of claims 3 to 7, **characterised in that** the retaining means (25, 31, 41, 47; 122, 125, 131, 141) comprise a clamping plate (47; 147) which, in the locked state of the locking unit (21; 121), bears against the clamping magnet (49; 149) and, for transfer into the unlocked state, carries out a tilting or pivoting movement.

9. Head restraint (1, 101) according to claim 8, **characterised in that** the clamping plate (47; 147) is connected in an articulated manner to the intercepting element (31) and/or to a release means (141) which acts upon the retaining means (25, 31, 41, 47; 122, 125, 131, 141) at least in the event of a crash.

## Revendications

1. Appui-tête (1, 101) pour un siège de véhicule, en particulier pour un siège de véhicule automobile, comportant un premier ensemble (1', 11 ; 111), fixe, et un deuxième ensemble (1'', 13 ; 113), mobile, une commande (15 ; 115), maintenue dans le cas normal par une unité de verrouillage (21 ; 121), déplaçant vers l'avant le deuxième ensemble (1'', 13 ; 113) par rapport au premier ensemble (1', 11 ; 111), **caractérisé par le fait que** l'unité de verrouillage (21 ; 121) présente un aimant adhérent (49 ; 149) avec un aimant permanent pour l'application d'une force de maintien magnétique et une bobine excitée en cas d'accident pour la modification de la force de maintien magnétique en cas d'accident.

2. Appui-tête (1, 101) selon la revendication 1, **caractérisé par le fait que** la bobine de l'aimant adhésif (19 ; 149) excitée en cas d'accident constitue un champ magnétique opposé à l'aimant permanent.

3. Appui-tête (1, 101) selon l'une des revendications 1 ou 2, **caractérisé par le fait que**, dans un état verrouillé de l'unité de verrouillage (21 ; 121), l'aimant adhérent (49 ; 149) retient sur des moyens de support (25, 31, 41, 47 ; 122, 125, 131, 141) la commande précontrainte (15 ; 115).

4. Appui-tête (1, 101) selon la revendication 3, **caractérisé par le fait qu'**en cas d'accident, les moyens de support (25, 31, 41, 47 ; 122, 125, 131, 141) libèrent la commande précontrainte (15 ; 115).

5. Appui-tête (1, 101) selon l'une des revendications 3 ou 4, **caractérisé par le fait que** les moyens de support (25, 31, 41, 47 ; 122, 125, 131, 141) comprennent des éléments de structure pivotants, chargés par ressort (25, 31 ; 125, 131, 141).

6. Appui-tête (1, 101) selon l'une des revendications 3 à 5, **caractérisé par le fait que** les moyens de support (25, 31, 41, 47 ; 122, 125, 131, 141) comprennent un cliquet (25, 125), lequel, dans l'état verrouillé, retient au moins indirectement la commande précontrainte (15 ; 115), réalisée sous la forme d'un ressort et une pièce d'arrêt (31) ou un ressort de retenue (131), laquelle ou lequel, dans l'état verrouillé, verrouille le cliquet (25 ;125) précontraint dans le sens de l'ouverture.

7. Appui-tête (1, 101) selon la revendication 6, **caractérisé par le fait que**, dans l'état déverrouillé, la pièce d'arrêt (31) verrouille à nouveau le cliquet (25) mobile dans le sens de l'ouverture.

8. Appui-tête (1, 101) selon l'une des revendications 3 à 7, **caractérisé par le fait que** les moyens de support (25, 31, 41, 47 ; 122, 125, 131, 141) comprennent une plaque adhérente (47 ; 147) laquelle, dans l'état verrouillé, applique l'unité de verrouillage (21 ; 121) sur l'aimant adhérent (49 ; 149) et pour le passage dans l'état déverrouillé, réalise un mouvement basculant ou pivotant.

9. Appui-tête (1, 101) selon la revendication 8, **caractérisé par le fait que** la plaque adhérente (47 ; 147) est liée de façon articulée avec la pièce d'arrêt (31) et/ou est liée par un moyen de déclenchement (141) percutant les moyens de support (25, 31, 41, 47 ; 122, 125, 131, 141) au moins en cas d'accident.
